# EUROPEAN PATENT SPECIFICATION

(11) **EP 1 040 908 B1**
(45) Date of publication and mention of the grant of the patent: **19.05.2004**
(21) Application number: 00106077.1
(22) Date of filing: 30.03.2000
(51) Int. Cl.: B29D 30/38

(54) **Supply method of belt member**
Verfahren zum Zuführen von Gürtellagen
Procédé pour l'alimentation de nappes d'armature

(30) Priority: 30.03.1999 JP 8800599
(43) Date of publication of application: 04.10.2000
(60) Divisional application: 04003396.1
(73) Proprietor: THE YOKOHAMA RUBBER CO., LTD., Tokyo, 105 (JP)
(72) Inventor: Okada, Noboru, The Yokohama Rubber Co., Ltd., Hiratsuka-shi, Kanagawa-ken (JP); Hasegawa, Haruhisa, The Yokohama Rubber Co., Ltd., Hiratsuka-shi, Kanagawa-ken (JP); Take, Toshihiko, The Yokohama Rubber Co., Ltd., Hiratsuka-shi, Kanagawa-ken (JP)
(74) Representative: HOFFMANN - EITLE

(56) References cited:
- EP-A- 0 714 758
- EP-A- 0 904 959
- GB-A- 1 348 254
- US-A- 3 898 116
- US-A- 4 875 959

## Description

The present invention relates to a supply method of a belt member, comprising the steps of:
forming a plurality of strip sections by cutting a strip material, made up with reinforcing cords coated with unvulcanized rubber, to a predetermined length with a predetermined angle; producing a belt member having one tire peripheral length by splicing an integer number of the strip sections under a lined condition in order on a carrier-conveyor. Such a method is disclosed in GB-A-1348254.

Conventionally, when supplying a belt member of a pneumatic radial tire to a belt formation process, a broad sheet material, made up with number of lined reinforcing cords coated with unvulcanized rubber, is cut on the bias to a belt width with a predetermined angle, and these bias-cut sheet sections are processed into a long-scale belt material by splicing so that their cut ends form right and left edges. The belt material is wound to a cell and once stocked.

When forming a tire, the long-scale belt material is drawn out from the cell and cut along reinforcing cords to a length corresponding to a tire peripheral length so as to get a belt member for one tire.

However, since belt members, each being prepared for forming one tire, differ not only in width and length according to tire sizes but in cord angle according to tire specifications, belt members formed as above should be stocked as belt members with different dimensions for each tire specification. Thus, since many types of belt members are prepared as intermediate members, there have been problems such that a wide stock space or an intermediate stock are required and that it is not easy to meet small-lot productions.

Moreover, in the conventional method there are problems such that, since installation of a measuring unit or a cutting unit is necessary for cutting a long belt material to a predetermined size in a belt formation process, a high facility cost is required and maintenance takes much time and labor.

Reference is also made to the present applicant's EP-A-0904959 which was published on 31^{st} March, 1999, which is one day after the priority date of the present application. It also discloses the preamble of claim 1.

According to the present invention there is provided a supply method of a belt member as initially defined, characterized by: directly supplying the belt member having one tire peripheral length to a belt forming drum via an intermediate conveyer.

According to one embodiment, a strip material is cut to a predetermined size and spliced to form a belt member for one tire, and the belt member for one tire is directly supplied to a belt formation process by way of a conveyer and supplied to the belt formation process in order, as needed. Because of this, it is economical since a stock space or an intermediate storage which otherwise is required by conventional methods is not necessary, and facility costs can be reduced by discarding a cutting unit or a measuring unit in the belt formation process, and further it is also possible to meet small-lot productions. Although belt members with the same specification may be continuously produced in a belt member production process, in order to cope with small-lot productions, it is preferable to continuously form belt members of different specifications by each lot.

In order to better understand the invention, and to show how the same may be carried into effect, reference will now be made, by way of example, to the accompanying drawing, in which:

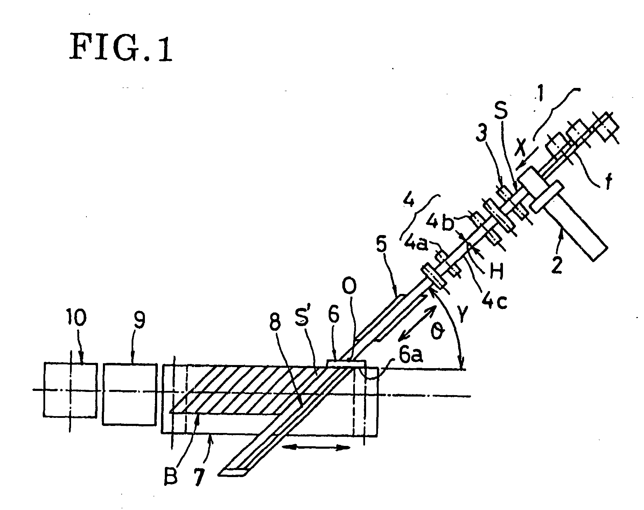

Fig. 1 is a schematic plan of a belt member formation system for executing an embodiment of the belt member supply method of the present invention.

Fig. 1 shows a schematic plan view of a belt member formation system for executing the belt member supply method according to the present invention. In Fig. 1, a reference numeral 1 is a creel stand for supplying a plurality of reinforcing cords f of steel cords, a reference numeral 2 is a rubber coating unit for coating the reinforcing cords f with rubber to form a strip material S, a reference numeral 3 is a drawing unit for drawing out the strip material S, a reference numeral 4 is a festooner for temporarily retaining the strip material S, a reference numeral 5 is a regular-length feeding unit for intermittently feeding the strip material S, and a reference numeral 6 is a cutting unit for cutting the strip material S with a predetermined angle. These units are almost serially arranged.

In a direction crossing the direction in which the above units are arranged, there is arranged a conveyer 7, which can rotate forward or in reverse for receiving number of strip sections S' cut in a predetermined length. On the conveyer 7, there is mounted a lining and splicing unit 8 for splicing lined strip sections S' along the longitudinal direction to join them.

On the unload side of the conveyer 7, there is provided a belt forming drum 10 for directly receiving a belt member B corresponding to one tire by way of an intermediate conveyer 9.

The creel stand 1 supports a plurality of reels, each of which winds the reinforcing cord f, allowing free rotation. The rubber coating unit 2 lines in parallel with a given pitch a plurality of reinforcing cords f drawn out from the creel stand 1, coats them with rubber by extruding unvulcanized rubber, and continuously form the strip material S having a constant width. A cross-sectional shape of the strip material S is a parallelogram, and both ends thereof in the width direction are tapered. A width H of the strip material S can be 5 to 60mm and preferably 10 to 30mm.

To the coating unit 2, the drawing unit 3 is connected. The drawing unit 3 continuously reels out the reinforcing cord f from the creel stand 1 and continuously draws out the strip material S formed by the rubber-coating unit 2 in direction of an arrow X.

To the drawing unit 3 the festooner 4 is connected. The festooner 4 is installed to absorb a speed difference in speed between a continuous drawing by the drawing unit 3 and an intermittent feeding by the regular-length feeding unit 5. The festooner 4 drives a pair of rollers 4a and 4b with a control based on a quantity of a retained strip material S for suspending an excess of strip material S in a loop-shape in a space 4c formed between these rollers 4a and 4b.

To the festooner 4, the regular-length feeding unit 5 is connected by way of a free roller conveyer. The regular-length feeding unit 5 is able to adjust an intermittent feed length. That is, the regular-length feeding unit 5 intermittently feed the strip material S for each given length according to a belt width. The regular-length feeding unit 5 also is adapted to swivel to both sides around a position O on a cutting position 6a of the cutting unit 6 as a center, as shown by an arrow Y.

The cutting unit 6 cuts the strip material S, carried to the conveyer 7 for each given length by the regular-length feeding unit 5, with a predetermined cutting angle θ in respect to the conveying direction, and consequently forms a plurality of strip sections S' in order. The strip material S is cut in regular length in parallel with the conveying direction of the conveyer 7.
The disclosed embodiment of the belt member supply method of the present invention is described by referencing Fig. 1. First, a plurality of reinforcing cords fare drawn out from reels supported by the creel stand 1, based on a traction force of the drawing unit 3, and by the rubber-coating unit 2 the reinforcing cords f are coated with unvulcanized rubber, and thus the strip material S having a constant width and a parallelogram cross-sectional shape is formed.

The strip material S having a constant width is carried from drawing unit 3 to festooner 4 for temporary retention, and then intermittently carried for each regular length to the conveyer 7 by the regular-length feeding unit 5. In this moment, the regular-length feeding unit 5 carries the strip material S from a cutting position 6a of the cutting unit 6 to the conveyer 7, for a predetermined length according to a belt width.

A tip end of the strip material S carried to the conveyer 7 by the regular-length feeding unit 5 is cut in the predetermined length with a cutting angle θ. When cutting is finished, a front edge in the conveyer carriage direction (left end) of the cut strip section S' and a rear edge in the conveyer carriage direction (right end) of a previously cut strip section S' are spliced by a splice press (not illustrated in the drawing) of the lining and splicing unit 8.

By splicing an integer number of the strip sections S' cut in the predetermined length with the cutting angle θ in order, a belt member B having one tire length is formed. When the belt member B having one tire length is formed, the belt member B is directly supplied to the belt forming drum 10 by way of the intermediate conveyer 9 which is directly connected to the conveyer 7 and a belt layer of a tire is formed on an outer periphery of the belt forming drum 10.

As described above, by cutting the strip material S in the predetermined length, splicing the strip sections S' to form the belt member B for one tire and directly supplying the belt member B to the belt formation process, there is no need to provide a stock space for temporarily stocking the belt member B and it is economical because there is no need to have an intermediate stock of belt member B, and yet is also possible to meet small-lot tire productions.

To meet small-lot productions in this embodiment, the belt member B may be made different in specification, such as cord angle, width and length, for each lot. These belt members B of a plurality of types may be supplied to the forming drum 10 in order.

Advantages of the above described embodiments might be to provide a supply method of a belt member that will reduce a stock space and an intermediate stock, to reduce facility costs in a belt formation process, and to meet small-lot productions.

## Claims

1. A supply method of a belt member (B), comprising the steps of:
forming a plurality of strip sections (S') by cutting a strip material (S), made up with reinforcing cords (f) coated with unvulcanized rubber, to a predetermined length with a predetermined angle (θ); producting a belt member having one tire peripheral length by splicing an integer number of the strip sections under a lined condition in order on a carrier-conveyer (7);
and **characterized by**:
directly supplying the belt member having one tire peripheral length to a belt forming drum (10) via an intermediate conveyer (9).

2. A supply method of a belt member as claimed in claim 1, wherein belt members of the same specification are continuously formed in said belt member production process.

3. A supply method of a belt member as claimed in claim 1, wherein belt members of different specifications are continuously formed in said belt member production process.

## Patentansprüche

1. Verfahren zum Zuführen eines Gürtelelements (B), mit den folgenden Schritten:
Ausbilden von mehreren Streifenabschnitten (S') durch Abschneiden eines Streifenmaterials (S), das mit Verstärkungskorden (f) aufgebaut ist, die mit unvulkanisiertem Gummi beschichtet sind, auf eine vorbestimmte Länge mit einem vorbestimmten Winkel (θ); Erzeugen eines Gürtelelements mit der Länge eines Außenumfangs eines Reifens durch Verspleißen einer ganzzeiligen Anzahl der Streifenabschnitte unter einer linierten Bedingung in einer Reihenfolge auf einem Träger-Förderer (7); und
**gekennzeichnet durch**
das direkte Zuführen des Bandelements mit der Länge des Umfangs eines Reifens zu einer Gürtelausbildetrommel (10) über ein Zwischenfördermittel (9).

2. Verfahren nach Anspruch 1, wobei Gürtelelemente mit der gleichen Spezifizierung kontinuierlich in dem Vorgang zum Erzeugen von Gürtelelementen ausgeformt werden.

3. Verfahren nach Anspruch 1, wobei Gürtelelemente mit unterschiedlichen Spezifizierungen kontinuierlich in dem besagten Vorgang zum Erzeugen von Gürtelelementen ausgebildet werden.

## Revendications

1. Procédé d'alimentation d'une nappe d'armature (B), comprenant les étapes consistant à
former plusieurs sections de bande (S') en coupant un matériau de bande (S), réalisé avec des câbles de renforcement (f) revêtus de caoutchouc non vulcanisé, en une longueur prédéterminée avec un angle prédéterminé (θ) ; produire une nappe d'armature présentant une longueur périphérique de bandage en soudant un nombre entier de sections de bande dans un état revêtu dans l'ordre sur un transporteur-convoyeur (7) ;
et **caractérisé par** :
amener directement la nappe d'armature présentant une longueur périphérique de bandage à un tambour de formation de nappe d'armature (10) par un convoyeur intermédiaire (9).

2. Procédé d'alimentation d'une nappe d'armature selon la revendication 1, où les nappes d'armature de la même spécification sont formées continuellement lors dudit procédé de production de nappes d'armature.

3. Procédé d'alimentation d'une nappe d'armature selon la revendication 1, où des nappes d'armature de spécifications différentes sont formées continuellement lors dudit procédé de fabrication de nappes d'armature.
